# EUROPEAN PATENT SPECIFICATION

(11) **EP 0 333 689 B1**
(45) Date of publication and mention of the grant of the patent: **29.12.1993**
(21) Application number: 89850087.1
(22) Date of filing: 14.03.1989
(51) Int. Cl.: G06F 11/34, G06F 11/22

(54) **Method and device for diagnosing bad performance in a computer system**
Verfahren und Vorrichtung, die schlechte Leistung eines Rechnersystemes diagnostisiert
Procédé et dispositif pour diagnostiquer de mauvaises performance dans un système de calculateur

(30) Priority: 18.03.1988 SE 8801008
(43) Date of publication of application: 20.09.1989
(73) Proprietor: International Business Machines Corporation, Armonk, N.Y. 10504 (US)
(72) Inventor: Olsson, Jan Erik, S-116 37 Stockholm (SE)
(74) Representative: Burt, Roger James, Dr.

(56) References cited:
- EP-A- 0 257 241
- EP-A- 0 259 224
- US-A- 4 590 550

## Description

The present invention relates in general to performance management in computer installations, and in particular to diagnosing bad performance on the basis of measurement data, by means of an Expert System (ES) shell, and it is embodied in a method and device for carrying out said diagnosing.

Performance management seems be to an activity that is needed in every computer installation, but for which the necessary resources rarely are available. Typical symptoms indicating a performance problem are:
Large trivial response time
Large page delays
Large master IO-path wait.

The requirements for diagnosing a performance problem are the following:
Knowledge of the computer system
Understanding of measurement data
Availability of measurement data
Experience.

Experience and knowledge of the computer system are hard to obtain. It is these two functions that the present invention attempts to provide.

SLR (Service Level Reporter, is a log processor and is described in IBM General Information Manual, order number GH19-6529) performance management, offers a solution to the problem of making measurement data available. To use SLR of course requires that the user have an understanding of measurement data (by measurement data is understood system variable values as logged during operation of the installation).

Most difficulties with diagnosing computer performance problems arise because there is insufficient knowledge of the computer system and the person doing the analysis most often lacks the experience, required to interpret measurement data.

Performance management is a tedious task, and therefore the productivity of the experts is usually low. By means of the present invention it will be possible to analyze large amounts of data and present the result of the analysis to the user. The invention makes the expert more productive and makes the novice/inexperienced person more skilled. Those installations that already have an experienced performance analyst can still use the invention as a tool to solve the trivial, everyday type of problem, thus making the experienced expert more productive as he/she gets more time to spend on the nontrivial problems. The novice/inexperienced person may use the invention and by doing so achieve some of the experience needed to become an expert himself/herself.

Background art is described in the following publications:
IBM Research Report RC12511, 1987 by J. Hellerstein
"KnowledgeTool User's Guide and Reference", IBM Manual order number SH20-9251
"Rule Based Expert Systems", Addison-Wesley by Buchanan and Shortliffe
"Building Expert Systems", Addison-Wesley by Hayes-Roth, Waterman and Lenat
"Human Diagnostic Reasoning By Computer: An Illustration from Financial Analysis", Vol. 29 no 6 Management Science, pp 653-672 by M. J. Bouwman
Reference is also made to EP-A-0 259 224 relating to a method and device for diagnosing bad performance in a computer system, achieving performance management. Bad performance diagnoses are performed on the basis of measurement data by means of an expert shell called advisor. A set of diagnoses explaining the bad performances together with a justification for each diagnosis is also generated.

The object of the present invention is to offer a means for determining why performance in relation to one set of measurement data is worse than in relation to another set of data. The invention generates a set of diagnoses explaining the bad performance, together with a justification for each diagnosis. Another important aspect is to provide generality, that is, one must be able to analyse performance problems in different computer installations without major modifications. This is done by avoiding the use of fixed thresholds of the variables, and also by avoiding making recommendations and instead just diagnosing the problem, which makes the invention more transportable between many installations.

The invention compares measurement data with reference data and produces diagnostic explanations for bad performance. The measurement data is the data to be analyzed, that is, the data reflecting the problem situation. Reference data is data from a comparable situation where the service level agreements were met (by service level agreements is understood performance objectives as defined in SLR).

By means of the invention, hypothetical reasoning by using three different sets of relationships to derive the evidence needed to justify or refute a hypothesis is performed.

The relationship sets are:
Qualitative relationships
Exception relationships
Distributive relationships.

Each hypothesis uses a unique set of 'evidence'. Thereafter the actual evidence present in the data is derived by using the above-mentioned relationships. This derivation can be regarded as a cause-effect derivation, i.e. the relationships give the cause for a directional change or the exception of a variable. This cause can then be shown to have its cause in some other variable by using other relationships. When the relationships are exhausted, that is, when all the 'ultimate causes' have been found, an evaluation of the hypothesis takes place. This is done by comparing the set of evidence with what has and has not been derived, thus giving a measure of the confidence of the hypothesis.

The invention utilizes a knowledge data base (KB) and an expert system shell, implemented in KnowledgeTool (IBM KnowledgeTool is a licensed IBM product and is described in "KnowledgeTool User's Guide and Reference") as a meta-interpreter, and an important feature of the invention is to separate the KB from the shell. This can best be understood if one regards the KB as a set of knowledge-carrying rules (formalized in a convenient representation) and the shell as a set of meta-rules describing the reasoning process. During execution the latter set of rules act on the former set of rules to derive a diagnosis using data (measurement data) extracted from the computer installation.

Because of the simplicity of representing knowledge through relationships between system variables, there is no need to use any sophisticated languages to formalize the knowledge-carrying rules. Instead the rules could be encoded in formatted data sets, thus making it possible to provide a knowledge base editor interface.

The knowledge base is divided into ten partitions. This is done to ease the task of knowledge engineering and to separate the knowledge into what is intuitively felt as different parts. The partitions all belong to one of three subcategories, namely service levels, context-dependent knowledge, or context-independent knowledge.

Service levels are the service level agreements (in SLR terminology). The service levels consist of objectives and analysis requests, which together define the criteria for good performance. For example, the response time TRESP for a certain transaction should be below 10 s. It can be argued whether or not service levels have a proper place in the knowledge base, but they are in fact used by the shell to trigger an analysis.

Context dependent knowledge consists of diagnosis, search roots, evidence expected to be derived, and evidence not expected to be derived. These are context dependent in the sense that an objective, that is, a service level agreement, forms the context under which a diagnosis can be formulated. A diagnosis for a too long response time TRESP may be that there is a private area paging problem. A specific diagnosis only makes sense together with the (violated) objective it tries to diagnose. The same thing is true for search roots and evidence. Each search root 'belongs' to a specific diagnosis and vice versa for the evidence.

Context independent knowledge makes up the rest of the knowledge base. The components are context independent in the sense that they are not tied together with any objective, diagnosis, or search root. The context independent knowledge can be regarded as the 'axioms' for performance analysis, whereas the context-dependent knowledge is the 'heuristic' knowledge.

Thus, the invention offers a solution to the problem of handling multiple diagnoses. In previous implementations symptoms related to diagnoses are used to give a higher lower credibility to the diagnosis. However, when a symptom applies to many diagnoses difficulties arise. That is, all diagnoses where the symptom applies gets a higher/lower credibility, thus causing great difficulty in validating which of the different diagnoses is the correct one. The method according to the invention actually derives which symptoms that are or are not present under the context of a diagnosis. This greatly improves the ability to separate different competing diagnoses from each other. This enhances the quality of the diagnostic capability.

The invention is disclosed in the attached patent claims.

Below follows a more detailed description of the different constituents of the invention, with reference to the drawings, in which
Fig. 1 is a conceptual overview of a system for carrying out the invention, and
Fig. 2 is a chart showing the steps of the method.

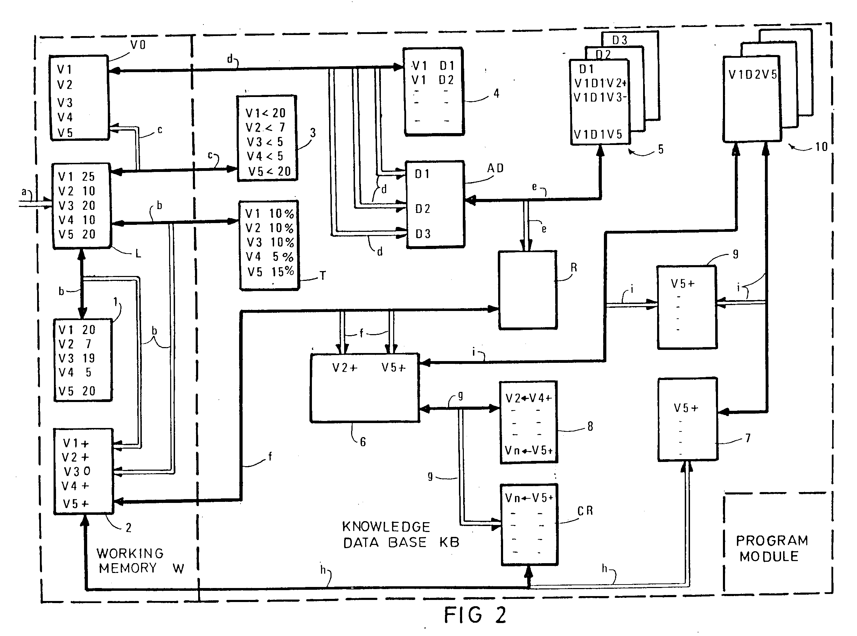

In figure 2 a single arrow denotes that a comparison or other action is performed on the data in the respective memory elements, and a double arrow denotes that the result of the comparison or action is stored in a memory element.

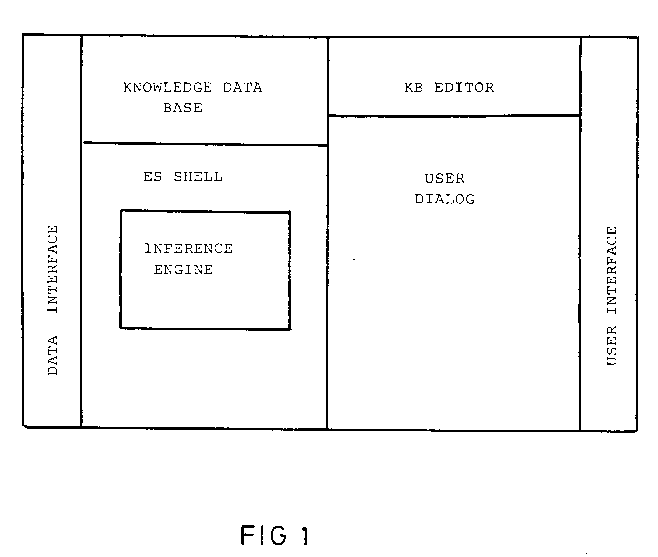

Fig. 1 is an outline of the system according to the invention. The data interface per se is not included in the invention, and neither are the KB editor, the user dialog nor the user interface, which form part of prior art and are thus not discussed herein.

The invention resides in the combination of the ES shell including what is called an 'inference engine' (to be described later) and the knowledge data base (KB).

Before the invention is described with reference to figure 2, a description of the different relations constituting the knowledge base will be given.

An OBJECTIVE is a system variable with an associated value. The value most often is identical to a service level agreement.

The OBJECTIVE is assigned a unique identity identical to the OBJECTIVE variable.

ANALYSIS REQUESTS are used to describe the direction of change of a variable with respect to the threshold as defined through the OBJECTIVE. Thus the OBJECTIVES describe the absolute value of a service level, and the ANALYSIS REQUEST defines which type of EXCEPTION (either greater or less than) triggers an analysis of the violated OBJECTIVE.

A DIAGNOSIS is an explanation of the cause of a violated OBJECTIVE. It is the DIAGNOSIS that plays the role of the hypothesis during the data inference phase. There may be any number of DIAGNOSES associated with a certain OBJECTIVE violation, but each DIAGNOSIS specifies which OBJECTIVE identity it applies to.

SEARCH ROOTS constitute a special set of variable relationships, namely the relations between the OBJECTIVE variable and a set of Left Hand Side (LHS) variables in the part of the KB that contains the variable relationships and the expected directional changes of the variables. A SEARCH ROOT is a necessary but not sufficient condition for considering a diagnosis. Thus a SEARCH ROOT may be regarded as an 'activating rule' for the diagnosis/hypothesis.

Thus the SEARCH ROOTs are 'entry points' in the set of variable relationships. Each root defines the start of a search map. The paths in the map are derived through inference using the different variable relationships.

An EXCEPTION is a variable threshold and the information stating whether the threshold is trespassed by values above or below it.

EVIDENCE EXPECTED to be derived are variables the presence of which justifies or refutes a certain DIAGNOSIS. That a variable has been derived means that it can be found in the search tree produced under the data inference phase. However, if the variable is not found in the search tree nothing is inferred.

An evidence variable can either justify or refute a DIAGNOSIS, depending on what is specified in the KB.

EVIDENCE NOT EXPECTED to be derived are variables that are not expected to be derived under the data inference phase. If this is the case (the variable is not found in the search tree), it is taken as an evidence variable. If the variable is found in the search tree nothing is inferred (see the paragraph "Evidence Expected to be Derived").

As for evidence variables, either they justify or refute a DIAGNOSIS, depending on what is specified in the KB.

Assume that we have a hypothesis stating a paging problem. The fact that we do not derive a specific variable indicating a channel problem can be interpreted as favorable evidence for the paging hypothesis. However, it is not certain that the variable, if it was derived, could be interpreted in the context of the paging hypothesis at all.

The two partitions of the knowledge base, 'EVIDENCE EXPECTED' and 'EVIDENCE NOT EXPECTED', are not mutually exclusive. That is, a variable that favors a given hypothesis if it is derived, does not necessarily refute the same hypothesis if it is not derived.

There are so called variable relationships which can be divided into three different subgroups, namely qualitative, EXCEPTION and distributive relationships.

Qualitative relationships describe how directional changes in variables are related to each other when there is a monotonic relation (either increasing or decreasing) between the variables. Then, without stating the actual mathematical function that governs this relation, a qualitative relation can be formulated describing the expected directional change between the variables.

Exception relationships explain the cause of an EXCEPTION of a variable through another EXCEPTION.

Distributive relationships explain the cause of a variable that is either excepted or has a directional change. The explanation is expressed as a variable with a value contributing to more than or less than a specified percentage of the first mentioned variable's value.

In figure 2 is shown a schematic picture of a device according to the invention, and there is also shown by means of arrows how the method according to the invention is carried out, and below a detailed description thereof will be given.

The device comprises a working memory W and a knowledge data base, each comprising a plurality of memory element or partitions.

Measurement data are collected (step a)) by means of any suitable data log and data are stored in a memory element or log L in the working memory W of the computer installation.

These measurement data are compared with reference data representing the normal performance of the installation (step b)), stored in a memory element 1 in said working memory W. The result of the comparison is stored in a second memory element 2. In a preferred embodiment the measurement data are further compared with tolerance factors in a tolerance factor table, stored in a memory element T in the knowledge data base KB. By means of the tolerance factors significant changes in measurement data with respect to reference data can be detected. The tolerance factors thus allow for slight variations in measurement data without yielding an outcome of the comparison that is stored in the second memory element 2.

A third memory element 3 contains system variable values defining objectives for the installation, i.e. desired values in order that the installation function properly. Measurement data are compared (step c)) with these objectives to find those objectives that are violated in a given situation of bad performance. The result of the comparison, i.e. the violated objectives are stored in a separate memory element VO in the working memory W.

A fourth memory element 4 in the knowledge data base KB contains a set of possible diagnoses of malfunctions in the installation. These diagnoses are each associated with a violated objective. There can be several different diagnoses associated with one violated objective. This memory element is searched for one or more diagnoses applicable to the present violated objective/objectives (step d)). Any such found applicable diagnoses are stored in a additional memory element AD.

A fifth memory element 5 contains a plurality of relations between system variables. Each such relation is associated with a specific diagnosis, and expresses a necessary but not sufficient condition for the associated diagnosis to be considered under the present violated objective. This memory element is searched (step e)) in order to find one or more such relations that can be assigned to the diagnoses found in step d). The result of the search, i.e. one or more such relations between system variables is stored in a still further memory element R.

The relations from step e) are compared with the qualitative data in the second memory element 2, for finding out whether one or more of the necessary but not sufficient conditions mentioned above are met (step f)). The result, i.e. all such conditions are selected as search roots for the continued analysis and stored in a sixth memory element 6.

An eigth memory element 8 contains cause-effect relations between system variables. This relations are context independent in the sense that they are valid without having regard to any diagnosis or any violated objective. This memory element is searched (step g)) in order to find a match between the search roots from step f) and the relations in said eigth memory elements, whereby the relations thus found are stored in still another memory element CR (step h)).

A tenth memory element 10 in the knowledge data base contains a plurality of relations between system variable, said relations defining or expressing evidence for a specific diagnosis being considered. Each time a search root or a qualitative data as expressed by the relations stored in memory element CR is found, a comparison between the evidence partition and said search root or qualitative data is performed (step i)). If a match occurs the inference is terminated and the evidence thus found is stored in a ninth memory element 9.

Finally, steps d)-i) are repeated until no inference is possible because the data are exhausted and only evidence remain.

All this evidence is assigned a probability for the validity of the diagnosis to which the evidence referers. The evidence for each diagnosis are combined and weighed in accordance with their respective assigned probabilities, and the most probable diagnosis is selected. This could be done automatically.

In the device there is also a module M containing a program for carrying out the method described above.

Below a more general description of the invention.

The process of diagnosing a violated OBJECTIVE has been divided into four different phases. The first thing the shell does is to identify all OBJECTIVES that have been violated and to translate input data into qualitative data, that is, it detects significant directional changes in the data. Secondly, the hypothesis, that is, the DIAGNOSIS explaining the OBJECTIVE violation, is extracted from the DIAGNOSIS partition of the KB, and 'activated' if at least one of the SEARCH ROOTS matches the measurement data. The hypothesis is then evaluated in the third and fourth phases. In the third phase the evidence needed to justify or refute the DIAGNOSIS is derived, using the context-independent subcategory of the KB. Finally, the fourth phase assembles the derived evidence for each DIAGNOSIS, making it possible for the user to select the most appropriate explanation for the OBJECTIVE violation. To do this the two evidence partitions of the KB are used.

Each of the above mentioned phases is represented by a set of KnowledgeTool rules. These rules perform an act of inference that is controlled by the rules in the knowledge base. That is, from each violated OBJECTIVE the shell infers a set of possible DIAGNOSES, and for each DIAGNOSIS a set of search roots are inferred. By using the context-independent variable relations the EVIDENCE EXPECTED to be derived is inferred from each SEARCH ROOT. The DIAGNOSIS is evaluated by checking off what has and has not been derived. Thus the shell is in fact an 'inference engine' acting on the rules in the knowledge base. This is understood by the fact that the shell selects and 'fires' valid rules, which in turn causes other rules to be fired.

It must be pointed out that this has nothing to do with the recognize act cycle performed by the inference engine in KnowledgeTool. The term inference engine is only used here as an analogy.

A more detailed description of each phase follows.

The first phase could be labelled initialization and qualitative translation. During this phase the data sets containing the reference and the measurement data are read in and loaded into the internal data structure of the system according to the present invention. Using the reference data and the measurement data, another class of data is created, namely qualitative data. The qualitative data contains the information about directional changes of the measurement data with respect to the reference data. To distinguish significant changes, a tolerance factor is defined for each variable. This factor specifies the minimum change in absolute magnitude to be considered. If the absolute magnitude of the change falls within the tolerance factor, the variable will be regarded as unchanged with respect to the reference data.

The initialization phase also includes the loading of the KB into an internal data structure of the system. Each partition of the KB is read in as a separate data set and loaded into a specific data structure.

In the second phase, OBJECTIVE evaluation and DIAGNOSIS formulation is carried out, and the violated OBJECTIVES are detected. This is done by using the information in the KB regarding which measurement variable is coupled with which OBJECTIVE, and the threshold that constitutes the actual OBJECTIVE. The OBJECTIVE thresholds are compared directly with the value of the associated measurement variables.

For each OBJECTIVE that is violated, the KB is searched for the DIAGNOSIS that is defined as applicable to the violated OBJECTIVE. That is, for each violation there will be a set of potential DIAGNOSES explaining the cause of the violation. The evaluation of the DIAGNOSIS will take place in the phases that follow, and a DIAGNOSIS is considered or 'activated' if at least one of its associated SEARCH ROOTS, as specified in the KB, matches the qualitative data.

Data inference is the third phase, and is performed by building tree-like structures using the variable relationships. The purpose of this phase is to derive relevant variables from the qualitative data and from the measurement data that can be used to evaluate the DIAGNOSIS (this will be done in the following phase). The starting points for the trees are determined through the SEARCH ROOTs, that is the SEARCH ROOTS that matched the measurement data. These can be regarded as 'entry points' into the set of variable relationships. The structure that is built starts off with a violated OBJECTIVE as the root. The next level in the tree will be the DIAGNOSIS/DIAGNOSES that is/are associated with this particular OBJECTIVE. Next level alter the DIAGNOSIS/DIAGNOSES are the SEARCH ROOTs. These SEARCH ROOTs are necessary but not sufficient conditions for considering the DIAGNOSIS in question. It also should be noted that these SEARCH ROOTs are not to be regarded as symptoms in the ordinary sense. Each SEARCH ROOT matches one or many LHS in the variable relations. The relations that hold will generate a descendant. The descendant is either a leaf or a node. If it is a leaf, then there is no matching LHS (match by name); otherwise, the descendant will be a node. Thus the variable relationships will generate a tree-like structure under each SEARCH ROOT.

A special case is when a branch in the tree prematurely terminates. By this we mean a node that has no descendants, that is, there were relations in the KB that had the node as LHS, but none of the relations were valid. This information can either be interpreted as an indication of missing relationships in the KB, or as a totally abnormal situation that could not be formalized as a variable relation.

It must be pointed out that the tree is context dependent from the SEARCH ROOTs and above, where the primary context is the violated OBJECTIVE that defines a set of possible DIAGNOSES. For each DIAGNOSIS another set of SEARCH ROOTs is defined. However, the structure below the SEARCH ROOT is context independent; that is, any variable relationship is equally applicable independent of which OBJECTIVE has been violated and which DIAGNOSIS is used to explain the violation.

In the fourth and final phase DIAGNOSIS evaluation is carried out. For each DIAGNOSIS the associated tree structure(s) will be searched for variables occurring as evidence expected to be derived. Each such occurrence will be used to evaluate the DIAGNOSIS. Similarly the trees will be searched for non-occurrences of variables defined as EVIDENCE NOT EXPECTED to be derived. Any such non-occurrence will be taken into account when evaluating the DIAGNOSIS.

The measurement and reference data is collected on two separate sequential files. To collect the needed data from the various system logs there are a number of suitable methods available, such as SLR.

The system and method according to the present invention has been tested on real measurement data. The results were very encouraging in the sense that the derived diagnoses were reasonable. By interviewing domain experts and comparing the experts' problem solving approach with the approach according to the invention, one comes to the conclusion that they seem to coincide in many cases. Therefore the conclusion is that the invention is a functional expert system, provided the KB contains a sufficient amount of knowledge.

## Claims

1. Method of diagnosing bad performance in a computer installation in terms of violated objectives, wherein the objectives are considered as violated only if measurements differ from reference data by a predetermined tolerance factor, comprising the steps of:
a) measuring and logging measurement data indicative of the state of the computer installation in a data log memory (L) within at least one working memory (W),
b) comparing said measurement data with reference data representing the normal function of the computer installation, said reference data being stored in a first memory element (1) in said at least one working memory (W), for creating qualitative data containing information about changes in measurement data in relation to reference data, and storing said qualitative data in a second memory element (2) in said at least one working memory,
c) comparing said measurement data with predefined objectives expressed as system variable values, stored in a third memory element (3) within a knowledge data base (KB), for detecting violated objectives, and storing said violated objectives in a violated objective memory element (VO) within said at least one working memory (W),
d) searching applicable diagnoses in a first partition of said knowledge data base (KB), containing a set of possible diagnoses of malfunctions, said possible diagnoses being associated with violated objectives and stored in a fourth memory element (4), in order to find one or more diagnoses applicable to the present violated objectives, stored in said violated objective memory element (VO), and storing said applicable diagnoses in an applicable diagnosis memory element (AD),
e) in a second partition of said knowledge data base, containing context dependent relations between the computer installation variables, said context dependent relations each being associated with a specific diagnosis, and expressing necessary but not sufficient conditions for a diagnosis to be considered or activated, said context dependent relations being stored in a fifth memory element (5), searching one or more such diagnosis associated relations that are assignable to the applicable diagnoses (AD) found in step d), and storing said diagnosis associated relations in a further memory element (R),
f) comparing said diagnosis associated relations (R) with said qualitative data (2), in order to find out whether one or more of said necessary but not sufficient conditions are met, whereby such conditions are selected as search roots and are stored in a sixth memory element (6) within said second partition of said knowledge data base (KB),
g) in a third partition of said knowledge data base containing diagnosis context independent cause-effect relations between the computer installation variables, stored in an eighth memory element (8), searching one or more relations between said search roots (6) stored in step f) and said context independent cause-effect relations of the computer installation variables, and storing the found relations in an additional memory element (CR),
h) comparing said found relations of step g) with the qualitative data (2), whereby the matched qualitative data is stored in a seventh memory element (7) within said knowledge data base (KB),
i) comparing said matched qualitative stored data (7) and the search roots (6) of step f) with a set of evidence relations between the computer installation variables, stored in a tenth memory element (10) within said knowledge data base (KB), said evidence relations expressing evidence for a given diagnosis, and if there is a match between the matched qualitative stored data, the said search roots and said evidence relations, meaning an evidence has been found and the inference is terminated, storing that found evidence in a ninth memory element (9) within said knowledge data base (KB), and
j) repeating steps d) to i) for every violated objective of said violated objective memory (VO) until no more inference is possible as said violated objectives are exhausted.

2. Method as claimed in claim 1, wherein the comparison in step b) comprises comparison of measurement data with a tolerance factor table, for detecting significant changes in relation to reference data, said tolerance factors being stored in a memory element (T) in the knowledge data base.

3. Method as claimed in claim 1 or 2, wherein each said evidence has been assigned a probability for the validity of the diagnosis in question.

4. Method as claimed in any of claims 1 to 3, wherein the evidence are comprised of the computer installation variables with accompanying information about the change of the variable value that is required for the diagnosis in question to be considered or activated.

5. Method as claimed in any of claims 1 to 4, wherein all evidence derived in steps a) to j) for each diagnosis are combined and weighed in accordance with their respective assigned probabilities.

6. Method as claimed in any of claims 1 to 5, wherein the most probable diagnosis is automatically selected.

7. Device for diagnosing bad performance in a computer installation in terms of violated objectives, wherein the objectives are considered as violated only if measurements differ from reference data by a predetermined tolerance factor, said device comprising at least one working memory (W), and a knowledge data base (KB), and comprising:
a data log memory (L) for logging measurement data in the form of system variable values indicative of the computer installation,
a first memory element (1) in the working memory, said first memory element containing reference data representing normal function of the computer installation,
a second memory element (2) in the working memory, for storing qualitative data containing information of changes in measurement data with respect to reference data,
a violated objective memory element (VO) for storing data representing violated objectives,
said knowledge data base (KB) comprising a plurality of partitions or memory elements (3-10), wherein:
- a third memory element (3) contains predefined data objectives of the performance of said computer installation,
- a fourth memory element (4) contains a set of diagnoses of possible malfunctions, each diagnosis being associated with at least one violated objective (VO).
- an applicable diagnosis memory element (AD) is adapted for storing data as a result of a comparison between the data in the violated objective memory element (VO) and the data in the fourth memory element (4),
- a fifth memory element (5) contains data in the form of relations between system variables, said relations being associated with a respective diagnosis,
- a further memory element (R) is provided for storing data as a result of a comparison between the data in the applicable diagnosis memory element (AD) and the data in the fifth memory element (5),
- a sixth memory element (6) is adapted for storing the result of a comparison between the qualitative data in the second memory element (2) and data in the further memory element (R),
- an eight memory element (8) contains data in the form of diagnosis context independent cause-effect relations between system variables,
- an additional memory element (CR) is adapted for storing data as a result of a comparison between the data in the sixth and eight memory elements respectively,
- a seventh memory element (7) is adapted for storing qualitative data as a result of a comparison between the qualitative data in the second memory element (2) and data in the additional memory element (CR),
- a ninth memory element (9) is adapted for storing the result of a comparison between data stored in the sixth and seventh memory elements (6,7) respectively, and a tenth memory element (10) contains data in the form of evidence for a specific diagnosis, said device further comprising
a memory module (M), containing a program for carrying out the operations according to the method of claim 1.

8. Device as claimed in claim 7, comprising a tolerance factor memory element (T) in the knowledge data base, for use together with the first memory element (1) in step b), for detecting significant changes in measurement data.

## Patentansprüche

1. Verfahren zum Diagnostizieren schlechter Leistung im Sinne von verletzten Zielsetzungen in einer Computerinstallation, bei dem die Zielsetzungen als verletzt nur angesehen werden, wenn Messungen sich um einen vorgegebenen Toleranzfaktor von Bezugsdaten unterscheiden, umfassend die Schritte des:
a) Messens und Aufzeichnens von Meßdaten, die den Zustand der Computerinstallation angeben, in einem Datenaufzeichnungsspeicher (L) innerhalb zumindest eines Arbeitsspeichers (W),
b) Vergleichens der Meßdaten mit Bezugsdaten, die die normale Funktion der Computerinstallation darstellen, wobei die Bezugsdaten in einem ersten Speicherelement (1) in dem zumindest einen Arbeitsspeicher (W) gespeichert sind, zum Erstellen qualitativer Daten, die Informationen über Änderungen in den Meßdaten in Beziehung zu den Referenzdaten enthalten, und des Speicherns der qualitativen Daten in einem zweiten Speicherelement (2) in dem zumindest einen Arbeitsspeicher,
c) Vergleichens der Meßdaten mit vorgegebenen Zielsetzungen, die als Werte von Systemvariablen ausgedrückt sind, die in einem dritten Speicherelement (3) innerhalb einer Wissensdatenbank (KB) gespeichert sind, um verletzte Zielsetzungen festzustellen, und des Speicherns der verletzten Zielsetzungen in einem Speicherelement (VO) für verletzte Zielsetzungen innerhalb des zumindest einen Arbeitsspeichers (W),
d) Suchens zutreffender Diagnosen in einer ersten Unterteilung der Wissensdatenbank (KB), die einen Satz möglicher Diagnosen von Ausfällen enthält, wobei mögliche Diagnosen verletzten Zielsetzungen zugeordnet und in einem vierten Speicherelement (4) gespeichert sind, um eine oder mehrere Diagnosen zu finden, die auf die vorliegenden verletzten Zielsetzungen zutreffen und in dem Speicherelement (VO) für verletzte Zielsetzungen gespeichert sind, und des Speicherns der zutreffenden Diagnosen in einem Speicherelement (AD) für zutreffende Diagnosen,
e) Suchens in einer zweiten Unterteilung der Wissensdatenbank, die vom Zusammenhang abhängige Relationen zwischen den Variablen der Computerinstallation enthält, wobei jede der vom Zusammenhang abhängigen Relationen einer spezifischen Diagnose zugeordnet ist, und notwendige, aber nicht hinreichende Bedingungen dafür ausdrückt, daß eine Diagnose als aktiviert betrachtet wird, wobei die vom Zusammenhang abhängigen Relationen in einem fünften Speicherelement (5) gespeichert sind, einer oder mehrerer solcher einer Diagnose zugeordneten Relationen, die den im Schritt d) gefundenen Diagnosen (AD) zugeordnet werden können, und des Speicherns der der Diagnose zugeordneten Relationen in einem weiteren Speicherelement (R),
f) Vergleichens der der Diagnose zugeordneten Relationen (R) mit den qualitativen Daten (2), um herauszufinden, ob eine oder mehrere der notwendigen, aber nicht hinreichenden Bedingungen erfüllt sind, wodurch solche Bedingungen als Suchstämme ausgewählt und in einem sechsten Speicherelement (6) innerhalb der zweiten Unterteilung der Wissensdatenbank (KB) gespeichert werden,
g) Suchens in einer dritten Unterteilung der Wissensdatenbank, die vom Zusammenhang der Diagnose unabhängige Ursache- Wirkungs-Relationen zwischen den Variablen der Computerinstallation enthält, die in einem achten Speicherelement (8) gespeichert sind, einer oder mehrerer Relationen zwischen den Suchstämmen (6), die im Schritt f) gespeichert wurden, und der vom Zusammenhang unabhängigen Ursache-Wirkungs-Relationen der Variablen der Computerinstallation, und des Speicherns der gefundenen Relationen in einem zusätzlichen Speicherelement (CR),
h) Vergleichens der im Schritt g) gefundenen Relationen mit den qualitativen Daten (2), wodurch die übereinstimmenden qualitativen Daten in einem siebten Speicherelement (7) innerhalb der Wissensdatenbank (KB) gespeichert werden,
i) Vergleichens der übereinstimmenden qualitativen gespeicherten Daten (7) und der Suchstämme (6) von Schritt f) mit einem Satz von Evidenz-Relationen zwischen den Variablen der Computerinstallation, die in einem zehnten Speicherelement (10) innerhalb der Wissensdatenbank (KB) gespeichert sind, wobei die Evidenz-Relationen die Evidenz für eine bestimmte Diagnose ausdrücken, und, wenn eine Übereinstimmung besteht zwischen den übereinstimmenden, gespeicherten qualitativen Daten, den Suchstämmen und den Evidenz-Relationen, was bedeutet, daß eine Evidenz gefunden wurde und das Rückschließen beendet ist, Speicherns der gefundenen Evidenz in einem neunten Speicherelement (9) innerhalb der Wissensdatenbank (KB), und des
j) Wiederholens der Schritte d) bis i) für jede verletzte Zielsetzung des Speichers (VO) für verletzte Zielsetzungen, bis kein Rückschluß mehr möglich ist, da die verletzten Zielsetzungen erschöpft sind.

2. Verfahren nach Anspruch 1, bei dem der Vergleich im Schritt b) den Vergleich der Meßdaten mit einer Toleranzfaktor-Tabelle umfaßt, um bedeutsamer Änderungen in bezug auf die Referenzdaten festzustellen, wobei die Tolerenzfaktoren in einem Speicherelement (T) in der Wissensdatenbank gespeichert sind.

3. Verfahren nach Anspruch 1 oder 2, bei dem jeder Evidenz eine Wahrscheinlichkeit für die Gültigkeit der in Frage stehenden Diagnose zugeordnet ist.

4. Verfahren nach einem der Ansprüche 1 bis 3, bei dem die Evidenz besteht aus den Variablen der Computerinstallation mit zugehörigen Informationen über die Änderung des Wertes der Variablen, die erforderlich ist, um die in Frage stehende Diagnose als aktiviert zu betrachten.

5. Verfahren nach einem der Ansprüche 1 bis 4, bei dem alle in den Schritten a) bis j) abgeleiteten Evidenzen für jede Diagnose kombiniert und entsprechend ihren zugeordneten Wahrscheinlichkeiten gewichtet werden.

6. Verfahren nach einem der Ansprüche 1 bis 5, bei dem die wahrscheinlichste Diagnose systematisch ausgewählt wird.

7. Vorrichtung zum Diagnostizieren schlechter Leistung im Sinne verletzter Zielsetzungen in einer Computerinstallation, bei der die Zielsetzungen als verletzt nur betrachtet werden, wenn Messungen sich von Referenzdaten um einen vorgegebenen Tolerenzfaktor unterscheiden, wobei die Vorrichtung zumindest einen Arbeitsspeicher (W) umfaßt und eine Datenbasis (KB), und umfaßt:
einen Datenaufzeichnungsspeicher (L) zum Aufzeichnen von Meßdaten in der Form von Werten von Systemvariablen, die auf die Computerinstallation hinweisen,
ein erstes Speicherelement (1) im Arbeitsspeicher, wobei das erste Speicherelement Referenzdaten enthält, die die normale Funktion der Computerinstallation darstellen,
ein zweites Speicherelement in dem Arbeitsspeicher zum Speichern qualitativer Daten, die Informationen über Änderungen der Meßdaten in Bezug auf die Bezugsdaten enthalten,
ein Speicherelement (VO) für verletzte Zielsetzungen zum Speichern von Daten, die verletzte Zielsetzungen darstellen, wobei die Wissensdatenbank (KB) eine Vielzahl von Unterteilungen oder Speicherelementen (3-10) enthält, in denen:
ein drittes Speicherelement (3) vordefinierte Datenzielsetzungen der Leistung der Computerinstallation enthält,
ein viertes Speicherelement (4) einen Satz von Diagnosen möglicher Ausfälle enthält, wobei jede Diagnose zumindest einer verletzten Zielsetzung (VO) zugeordnet ist,
ein Speicherelement (AD) für eine zutreffende Diagnose geeignet ist zum Speichern von Daten als Ergebnis eines Vergleichs zwischen den Daten in dem Speicherelement (VO) für verletzte Zielsetzungen und den Daten in dem vierten Speicherelement (4),
ein fünftes Speicherelement (5) Daten in der Form von Relationen zwischen den Systemvariablen enthält, wobei die Relationen einer entsprechenden Diagnose zugeordnet sind,
ein weiteres Speicherelement (R) vorgesehen ist zum Speichern von Daten als Ergebnis eines Vergleichs zwischen den Daten in dem Speicherelement (AD) für die zutreffende Diagnose und den Daten in dem fünften Speicherelement (5),
ein sechstes Speicherelement (6) geeignet ist zum Speichern des Ergebnisses eines Vergleichs zwischen den qualitativen Daten in dem zweiten Speicherelement (2) und den Daten in dem weiteren Speicherelement (R),
ein achtes Speicherelement (8) Daten enthält in der Form von im Zusammenhang mit der Diagnose unabhängigen Ursache-Wirkungs-Relationen zwischen den Systemvariablen,
ein zusätzliches Speicherlement (CR) geeignet ist zum Speichern von Daten als Ergebnis eines Vergleichs zwischen den Daten in dem sechsten und dem achten Speicherelement,
ein siebtes (7) Speicherelement geeignet ist zum Speichern qualitativer Daten als Ergebnis eines Vergleichs zwischen den qualitativen Daten in dem zweiten Speicherelement (2) und den Daten in dem zusätzlichen Speicherelement (CR),
ein neuntes Speicherelement (9) geeignet ist zum Speichern des Ergebnisses eines Vergleichs zwischen dem in dem sechsten und siebten Speicherelement (6, 7) gespeicherten Daten, und ein zehntes Speicherelement (10) Daten in der Form einer Evidenz für eine spezielle Diagnose enthält, wobei die Vorrichtung weiter umfaßt
einen Speichermodul (M), der ein Programm für das Ausführen der Operationen gemäß dem Verfahren nach Anspruch 1 enthält.

8. Vorrichtung nach Anspruch 7, umfassend ein Speicherelement (T) für Toleranzfaktoren in der Wissensdatenbank zur Benutzung zusammen mit dem ersten Speicherelement (1) im Schritt b) zum Feststellen bedeutsamer Änderungen in den Meßdaten.

## Revendications

1. Procédé de diagnostic de mauvaises performances dans une installation d'ordinateur en termes d'objectifs violés, dans lequel les objectifs ne sont considérés comme violés que si des mesures se différencient des données de référence par un facteur de tolérance prédéterminé, comprenant les étapes suivantes:
a) la mesure et l'enregistrement de données de mesure indiquant l'état de l'installation d'ordinateur dans une mémoire d'enregistrement de données (L) dans au moins une mémoire de travail (W),
b) la comparaison desdites données de mesure à des données de référence représentant la fonction normale de l'installation d'ordinateur, lesdites données de référence étant emmagasinées dans un premier élément de mémoire (1) dans ladite au moins une mémoire de travail (W), pour créer des données qualitatives contenant des informations relatives à des modifications des données de mesure par rapport aux données de référence, et l'emmagasinage lesdites données qualitatives dans un second élément de mémoire (2) dans ladite au moins une mémoire de travail,
c) la comparaison desdites données de mesure à des objectifs prédéfinis exprimés comme des valeurs des variables de système, emmagasinées dans un troisième élément de mémoire (3) dans une base de données de connaissances (KB), pour détecter des objectifs violés, l'emmagasinage desdits objectifs violés dans un élément de mémoire d'objectifs violés (VO) dans ladite au moins une mémoire de travail (W),
d) la recherche de diagnostics applicables dans une première partie de ladite base de données de connaissances (KB), contenant un ensemble de diagnostics possibles de mauvais fonctionnements, lesdits diagnostics possibles étant associés à des objectifs violés et emmagasinés dans un quatrième élément de mémoire (4), afin de trouver un ou plusieurs diagnostics applicables aux présents objectifs violés, emmagasinés dans ledit élément de mémoire d'objectifs violés (VO), et l'emmagasinage desdits diagnostics applicables dans un élément de mémoire de diagnostics applicables (AD),
e) dans une deuxième partie de ladite base de données de connaissances contenant des relations dépendant du contexte entre les variables de l'installation d'ordinateur, lesdites relations dépendant du contexte étant chacune associées à un diagnostic spécifique, et exprimant des conditions nécessaires mais non suffisantes pour qu'un diagnostic soit considéré ou activé, lesdites relations dépendant du contexte étant emmagasinées dans un cinquième élément de mémoire (5), la recherche d'une ou de plusieurs de ces relations associées aux diagnostics qui peuvent être attribuées aux diagnostiques applicables (AD) trouvés à l'étape d), et l'emmagasinage desdites relations associées aux diagnostics dans un autre élément de mémoire (R),
f) la comparaison desdites relations associées aux diagnostics (R) auxdites données qualitatives (2), afin de déterminer si l'une ou plusieurs desdites conditions nécessaires mais non suffisantes sont remplies, par quoi ces conditions sont sélectionnées comme racines de recherche et sont emmagasinées dans un sixième élément de mémoire (6) dans ladite deuxième partie de ladite base de données de connaissances (KB),
g) dans une troisième partie de ladite base de données de connaissances contenant contenant des relations de cause à effet indépendantes du contexte des diagnostics entre les variables de l'installation d'ordinateur, emmagasinées dans un huitième élément de mémoire (8), la recherche d'une ou de plusieurs relations entre lesdites racines de recherche (6) emmagasinées à l'étape f) et lesdites relations de cause à effet indépendantes du contexte des variables de l'installation d'ordinateur, et l'emmagasinage des relations trouvées dans un élément de mémoire supplémentaire (CR),
h) la comparaison desdites relations trouvées à l'étape g) aux données qualitatives (2), par quoi les données qualitatives conformes sont emmagasinées dans un septième élément de mémoire (7) dans ladite base de données de connaissances (KB),
i) la comparaison desdites données emmagasinées qualitatives conformes (7) et des racines de recherche (6) de l'étape f) à un ensemble de relations d'évidence entre les variables de l'installation d'ordinateur, emmagasinées dans un dixième élément de mémoire (10) dans ladite base de données de connaissances (KB), lesdites relations d'évidence exprimant l'évidence d'un diagnostic donné, et s'il y a conformité entre les données emmagasinées qualitatives conformes, lesdites racines de recherche et lesdites relations d'évidence, signifiant qu'une évidence a été trouvée et que l'inférence est terminée, l'emmagasinage de cette évidence trouvée dans un neuvième élément de mémoire (9) dans ladite base de données de connaissances (KB), et
j) la répétition des étapes d) à i) pour chaque objectif violé de ladite mémoire d'objectifs violés (VO) jusqu'à ce qu'aucune inférence ne soit plus possible lorsque lesdits objectifs violés sont épuisés.

2. Procédé selon la revendication 1 dans lequel la comparaison à l'étape b) comprend la comparaison des données de mesure à une table de facteurs de tolérance, pour détecter des changements significatifs par rapport aux données de référence, lesdits facteurs de tolérance étant emmagasinés dans un élément de mémoire (T) dans la base de données de connaissances.

3. Procédé selon la revendication 1 ou 2 dans lequel à chacune desdites évidences, a été attribuée une probabilité de validité du diagnostic en question.

4. Procédé selon l'une quelconque des revendications 1 à 3 dans lequel les évidences sont composées des variables de l'installation d'ordinateur avec des informations jointes relatives à la modification de la valeur des variables qui est requise pour que le diagnostic en question soit considéré ou activé.

5. Procédé selon l'une quelconque des revendications 1 à 4 dans lequel toutes les évidences dérivées aux étapes a) à j) pour chaque diagnostic, sont combinées et pondérées selon leurs probabilités attribuées respectives.

6. Procédé selon l'une quelconque des revendication 1 à 5 dans lequel le diagnostic le plus probable est automatiquement sélectionné.

7. Dispositif pour diagnostiquer de mauvaises performances dans une installation d'ordinateur en termes d'objectifs violés, dans lequel les objectifs ne sont considérés comme violés que si des mesures se différencient des données de référence par un facteur de tolérance prédéterminé, ledit dispositif comprenant au moins une mémoire de travail (W) et une base de données de connaissances (KB), et comprenant:
- une mémoire d'enregistrement de données (L) pour enregistrer des données de mesure sous la forme de valeurs de variables de système indicatrices de l'installation d'ordinateur,
- un premier élément de mémoire (1) dans la mémoire de travail, ledit premier élément de mémoire contenant des données de référence représentant la fonction normale de l'installation d'ordinateur,
- un deuxième élément de mémoire (2) dans la mémoire de travail, pour emmagasiner des données qualitatives contenant des informations relatives à des modifications des données de mesure par rapport aux données de référence,
- un élément de mémoire d'objectifs violés (VO) pour emmagasiner des données représentant des objectifs violés,
ladite base de données de connaissances (KB) comprenant une pluralité de partitions ou éléments de mémoire (3-10), où:
- un troisième élément de mémoire (3) contient des objectifs de données prédéfinis des performances de ladite installation d'ordinateur,
- un quatrième élément de mémoire (4) contient un ensemble de diagnostics de mauvais fonctionnements possibles, chaque diagnostic étant associé à au moins un objectif violé (VO),
- un élément de mémoire de diagnostics applicables (AD) est adapté pour emmagasiner des données à la suite d'une comparaison entre les données dans l'élément de mémoire d'objectifs violés (VO) et les données dans le quatrième élément de mémoire (4),
- un cinquième élément de mémoire (5) contient des données sous la forme de relations entre des variables de système, lesdites relations étant associées à un diagnostic respectif,
- un autre élément de mémoire (R) est prévu pour emmagasiner des données à la suite d'une comparaison entre les données dans l'élément de mémoire de diagnostics applicables (AD) et les données dans le cinquième élément de mémoire (5),
- un sixième élément de mémoire (6) est adapté pour emmagasiner le résultat d'une comparaison entre les données qualitatives dans le deuxième élément de mémoire (2) et des données dans l'autre élément de mémoire (R),
- un huitième élément de mémoire (8) contient des données sous la forme de relations de cause à effet indépendantes du contexte des diagnostics entre des variables du système,
- un élément de mémoire supplémentaire (CR) est adapté pour emmagasiner des données à la suite d'une comparaison entre les données dans les sixième et huitième éléments de mémoire, respectivement,
- un septième élément de mémoire (7) est adapté pour emmagasiner des données qualitatives à la suite d'une comparaison entre les données qualitatives dans le deuxième élément de mémoire (2) et des données dans l'élément de mémoire supplémentaire (CR),
- un neuvième élément de mémoire (9) est adapté pour emmagasiner le résultat d'une comparaison entre des données emmagasinées dans les sixième et septième éléments de mémoire (6, 7), respectivement, et un dixième élément de mémoire (10) contient des données sous la forme d'évidence d'un diagnostic spécifique, ledit dispositif comprenant en outre:
un module de mémoire (M) contenant un programme pour exécuter les opérations selon le procédé de la revendication 1.

8. Dispositif selon la revendication 7, comprenant un élément de mémoire de facteurs de tolérance (T) dans la base de données de connaissances, pour être utilisé ensemble avec le premier élément de mémoire (1) de l'étape b), afin de détecter des modifications significatives dans les données de mesure.
